(19) **Europäisches Patentamt / European Patent Office / Office européen des brevets**

(11) **EP 1 400 991 B1**

(12) **EUROPEAN PATENT SPECIFICATION**

(45) Date of publication and mention
of the grant of the patent:
**24.08.2011 Bulletin 2011/34**

(51) Int Cl.:
**H01G 4/015** $^{(2006.01)}$

(21) Application number: **02733340.0**

(22) Date of filing: **06.06.2002**

(86) International application number:
**PCT/JP2002/005591**

(87) International publication number:
**WO 2002/101769 (19.12.2002 Gazette 2002/51)**

(54) **MULTILAYER FILM CAPACITOR AND PRODUCTION METHOD THEREOF**

MEHRSCHICHT-FILMKONDENSATOR UND DESSEN HERSTELLUNGSVERFAHREN

CONDENSATEUR A FILM MULTICOUCHES ET PROCEDE DE FABRICATION

(84) Designated Contracting States:
**DE IT**

(30) Priority: **08.06.2001 JP 2001173661**

(43) Date of publication of application:
**24.03.2004 Bulletin 2004/13**

(73) Proprietor: **Panasonic Corporation
Kadoma-shi
Osaka 571-8501 (JP)**

(72) Inventors:
• **SAITO, Toshiharu
Kawanishi-shi, Hyogo 666-0142 (JP)**
• **NAKATSUBO, Kazuhiro
Nei-gun, Toyama 939-2741 (JP)**

• **OSAMURA, Kazumi
Toyonaka-shi, Osaka 561-0802 (JP)**
• **SHIBUYA, Masatoshi
Higashitonami-gun, Toyama 939-1516 (JP)**
• **NISHIMORI, Toshiyuki
Toyama-shi, Toyama 930-0077 (JP)**

(74) Representative: **Grünecker, Kinkeldey,
Stockmair & Schwanhäusser
Anwaltssozietät
Leopoldstrasse 4
80802 München (DE)**

(56) References cited:
**EP-A1- 0 885 918    FR-A- 2 659 788
JP-A- 5 335 181    JP-A- 6 231 998
US-A- 5 291 642**

**Description**

FIELD OF THE INVENTION

The present invention relates to a multi-layer film capacitor used in electrical apparatuses, electronic apparatuses, and industrial apparatuses.

BACKGROUND OF THE INVENTION

A conventional method of manufacturing a multi-layer film capacitor is disclosed in Japanese Patent Laid-Open Publication No.55-160420. A film having metal evaporated thereon is wound on a relatively large cylindrical bobbin, and a sprayed-metal electrode is formed on an end of the bobbin by thermal spraying, thereby providing a mother capacitor. Then, the mother capacitor is cut off with a saw to obtain plural unit capacitors. A multi-layer film capacitor manufactured by this method reduces the number of processes for manufacturing it more than a winding-type capacitor manufactured by winding up each unit capacitor.

A film capacitor with a high working voltage assures a withstanding voltage by including a thick dielectric film. However, a multi-layer film capacitor assures a withstanding voltage based on both of the withstand voltage of a dielectric film depending upon the thickness of the dielectric film, similarly to the common film capacitor, and a withstand voltage of cut surfaces depending upon the cut surfaces of capacitor elements peculiar to the multi-layer film capacitor. A lower withstand voltage of the two withstand voltages becomes the withstand voltage of the multi-layer film capacitor.

In the case that the capacitor has a high working voltage, even if including a thick dielectric film and having a high withstand voltage of the dielectric film, the withstand voltage of the capacitor becomes lower than that of the winding-type film capacitor including a film having the same thickness if a withstand voltage of the cut surface of the capacitor element is lower than the withstand voltage of the dielectric film

The reason for the multi-layer capacitor to have the low withstanding voltage as described above is that a portion having the metal evaporated thereon in the mother capacitor is cut off, and it is difficult to increase the withstand voltage of the cut surface.

Methods for increasing the withstand voltage of the cut surface of the multi-layer film capacitor are disclosed in Japanese Patent Laid-Open Publication No.55-160419, Japanese Patent Laid-Open Publication No.56-101736, Japanese Patent Publication No.60-55981, and Japanese Patent Publication No.60-16740.

Japanese Patent Laid-Open Publication No.55-160419 discloses that a mother capacitor is cut off with a rotary saw having a cutting edge slightly rounded. The saw increases frictional heat generated while cutting stacked metallized films. The heat forms a melt deposit portion of a melt metallized film while expanding the films with the metal, thereby sealing the cut surface. In a unit capacitor provided after the cutting, even when a discharge is generated on the cut surface, the discharge current is greatly prevented from intruding into an inside layer of the capacitor element beyond the melt deposit portion. The sealing of the cut surface with melt deposit increase a withstand voltage of the cut surface since the discharge on the cut surface is not a surface discharge in which the discharge on the cut surface starts at a low voltage but a solid discharge in which the discharge starts at a high voltage.

In a multi-layer film capacitor obtained by cutting off with the rotary saw while rubbing it against the cut surface, the withstand voltage of the cut surface of the capacitor is limited to about AC500V. Accordingly, a rated voltage of an actual capacitor is not higher than about AC250V. It is extremely difficult to obtain a multi-layer film capacitor having a rated voltage not lower than this voltage, for example, about AC350V since the withstand voltage of cut surfaces cannot be increased. For example, when being used in various types of electrical apparatuses with a voltage not lower than AC350V, with the standards taken into account, a multi-layer film capacitor has a withstand voltage of its cut surfaces is required to be at least two times the rate voltage, not lower than AC700V.

In a conventional multi-layer film capacitor, since cut surfaces melt by cutting operation due to frictional heat causing the cut surface to be sealed with melt deposit of the metallized film, evaporated metal is mixed into the melt deposit on the cut surfaces. Accordingly, the metal existing near the cut surfaces decreases its withstand voltage.

The frictional heat generated as much as possible by increasing a rotating speed and lowering the cutting speed of the rotary saw allows the melt deposit of the metallized film on cut surfaces to increase a thickness of the melt deposit on the metal. Accordingly, there are limitations on maintenance of the insulating distance between film layers at cut surfaces and control of the melting of the metallized film.

Further, in characteristics of a multi-layer film capacitor obtained by cutting with relatively high frictional heat, a tanδ-characteristic tends to deteriorate due to an influence of considerable frictional heat. A capacitor obtained by cutting with frictional heat generated is not preferable as a multi-layer film capacitor having a rated voltage not lower than AC350V. Reasons for the deterioration of the tanδ-characteristic are that the evaporated layer near the cut surface is cracked if the frictional heat is excessive, causing the layer resistance to increase, and that a contact between the evaporated layer and the sprayed-metal electrode deteriorates due to thermal shrinkage of the metallized film.

A method for cutting the mother capacitor as well as a method for increasing the withstand voltage of the cut surfaces by secondarily processing the cut surface after cutting are disclosed, for example, in Japanese Patent Publication No.63-36131, Japanese Patent Laid-Open Publication No.5-335181, and Japanese Utility Model Laid-Open Publication No.3-57205. In the methods disclosed in these documents, evaporated metal exposed on cut surfaces is removed by laser beam machining or plasma etching in order to improve the withstand voltage of cut surfaces.

According to study by the inventor of the method for removing exposed metal on cut surfaces by laser beam machining or plasma etching, it was confirmed that such methods do not assure an insulating distance not shorter than 0.05mm cannot be easily assured between evaporated films on the cut surface.

For example, when YAG laser having a pulse width of 20ns and a wavelength of $1.06\mu m$ is applied to the cut surface of the conventional multi-layer film obtained by cutting with frictional heat generated, the film melting on the cut surface prevents the evaporated metallized film from removing. Therefore, the evaporated metal can be removed by a distance not longer than about 0.01mm from the cut surface. Also, if the laser beam power is increased to remove the evaporated film much more, a capacitor that assures a high withstand voltage cannot be easily provided since the melt deposit sticking to the cut surface is damaged by heat and carbonized.

In a plasma etching process, if intended to selectively remove the evaporated metal from the cut surface by a distance not shorter than 0.05mm, it is difficult to process a large quantity of elements since it is hard to stabilize vacuum in an etching chamber due to the influence of evaporating gas for etching material. It takes a long time to etching it. Further, it is not easy to selectively remove only the metal.

As above, for mass-production of multi-layer film capacitors used at high voltages, it has been necessary to find out a method for precisely and efficiently removing evaporated metal by a distance not shorter than 0.05mm at least from the cut surface without giving damage to the dielectric film.

In order to further enhance the withstand voltage and reliability of the multi-layer film capacitor, dielectric film and the material for evaporated metal need to be selected carefully.

In a conventional use for a low voltage, not higher than AC200V, polyester film, such as polyethylene terephthalate (PET), is generally employed as a dielectric material for a multi-layer film capacitor.

However, in order to obtain a multi-layer film capacitor having a rated voltage not lower than AC350V, the dielectric film may employ polypropylene having a tanδ-characteristic less than the PET. However, since the polypropylene film has a melting point lower than that of a PET film, it is difficult to suppress frictional melting of the multi-layer film during cutting. Therefore, the metallized polypropylene films which are stacked cannot be cut while having the cut surface having a withstand voltage not lower than AC700V.

Aluminum has been used as metal to be evaporated on a film for a multi-layer capacitor. Aluminum has a more excellent adhesion property during evaporation against polypropylene than zinc. The aluminum becomes aluminum oxide near the cut surface and is easy to be insulated. However, if aluminum is used for a long time, a capacitance of the capacitor decreases due to corrosion of aluminum more than zinc. Accordingly, aluminum cannot reduce the thickness of a dielectric film and is not advantageous for reducing a size of the capacitor.

Consequently, for ensuring a long-lasting reliability and the reducing of the size of the capacitor, an evaporated metal including a lot of zinc may be preferably used in the manufacturing of a multi-layer film capacitor although zinc is inferior to aluminum in the withstand voltage of the dielectric film.

However, even the multi-layer film capacitor including the metallized polypropylene film cannot have cut surfaces having a withstand voltage not lower than AC700V. Accordingly, a multi-layer film capacitor having a rated voltage not lower than AC350V has not been provided.

Document US 5 291 642 discloses a process to produce at least one non-metallized strip on metallized flexible plastic film rolls. This process comprises metallizing a wide flexible dielectric film over its full width, cutting wide metallized flexible film and winding the tapes thus created to form film rolls, and producing the non-metallized strips on the metallized flexible plastic film rolls by applying a laser beam. This prior art document further discloses a process to manufacture stacked capacitors. This process comprises winding at least one pair of metallized film rolls with left-hand and right-hand non-metallized strips respectively to form a stacked structure of capacitors to be prepared, metallizing the lateral faces of the wound structure to create lateral electrical connections, and cutting the master capacitor produced in this way into a plurality of capacitors.

SUMMARY OF THE INVENTION

It is an object of the present invention to provide for a method of manufacturing a multi-layer film capacitor and a multi-layer film capacitor including a metallized polypropylene film that has a rated voltage not lower than AC350V, has an excellent reliability, a small size, and is manufactured at a high productivity.

This is achieved by the features as set forth in the independent claims. Further advantageous embodiments of the present invention are set forth in the dependent claims.

A metallized polypropylene film is made by evaporating metal including zinc on a polypropylene film. A multi-layer body including the metallized polypropylene film stacked is made. Sprayed-metal electrodes is formed on respective ones of both sides of the multi-layer body. A capacitor element is provided by cutting the multi-layer body along a cut surface. Pulse laser beam having a pulse width ranging from 30ns to $1\mu$s is applied to the cut surface of the capacitor element to remove metal exposed on the cut surface and metal on a surface of the film near the cut surface by a distance not shorter than 0.05mm from the cut surface, thus providing the multi-layer film capacitor.

BRIEF DESCRIPTION OF THE DRAWINGS

Fig. 1 is a perspective view of a multi-layer film capacitor according to Exemplary Embodiments of the present invention.
Fig. 2 is a sectional view of the capacitor according to the Embodiments.
Fig. 3 is a sectional view of the capacitor according to the Embodiments.
Fig. 4 is an optical microscopic photo of a surface of a metallized film near a cut surface of the capacitor according to Embodiment 1.
Fig. 5 is a flow chart of a method for manufacturing the capacitor of the Embodiments.
Fig. 6 shows the relationship between distances by which the evaporated metal layer removed and a withstand voltage of the capacitor of the Embodiments.

DETAILED DESCRIPTION OF PREFERRED EMBODIMENTS

Exemplary Embodiment 1

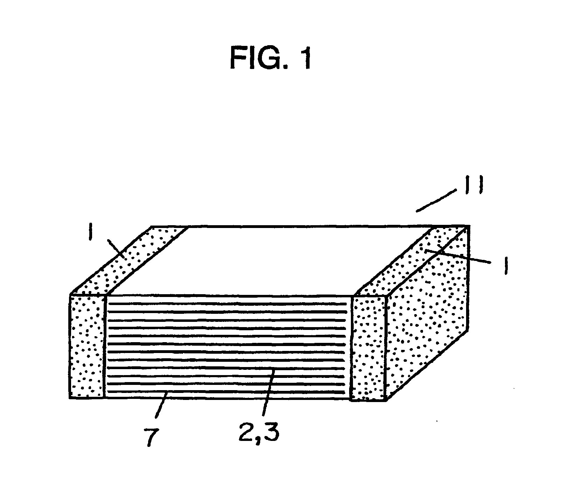

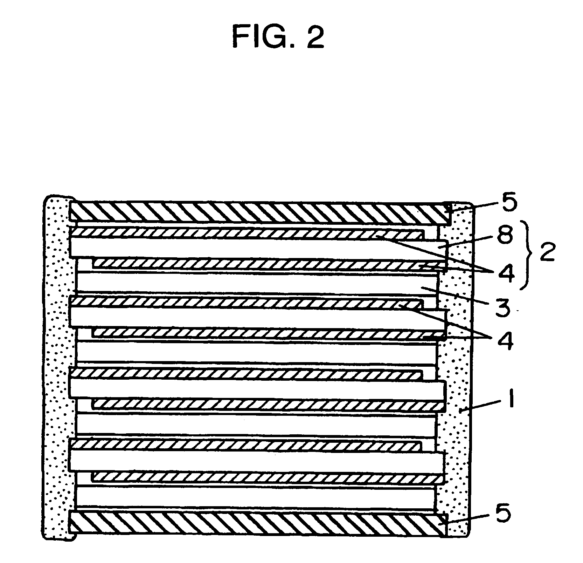

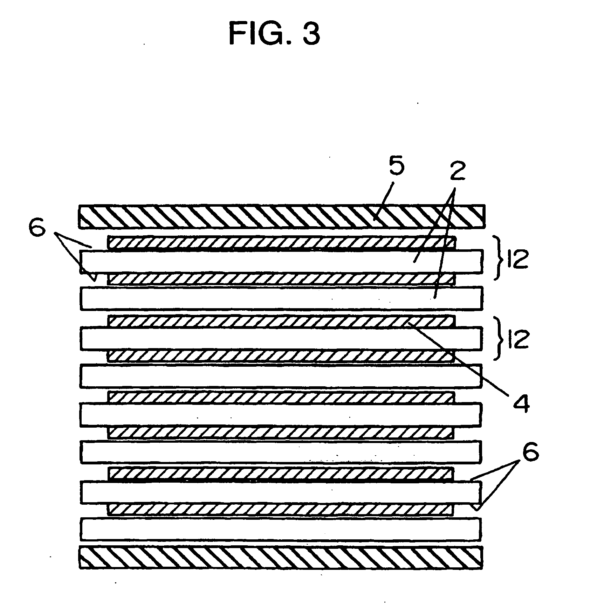

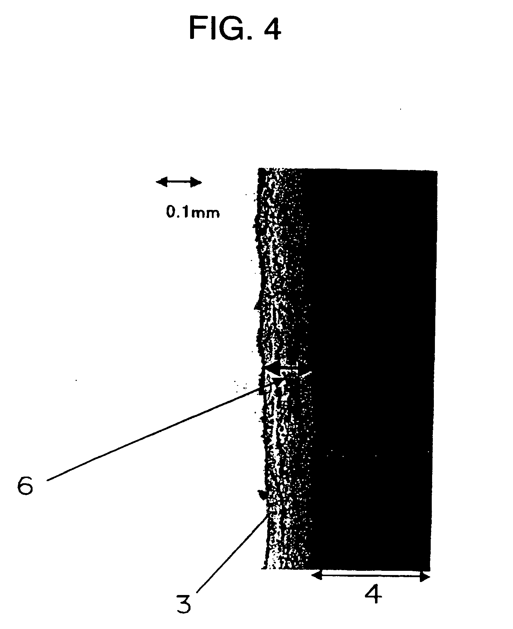

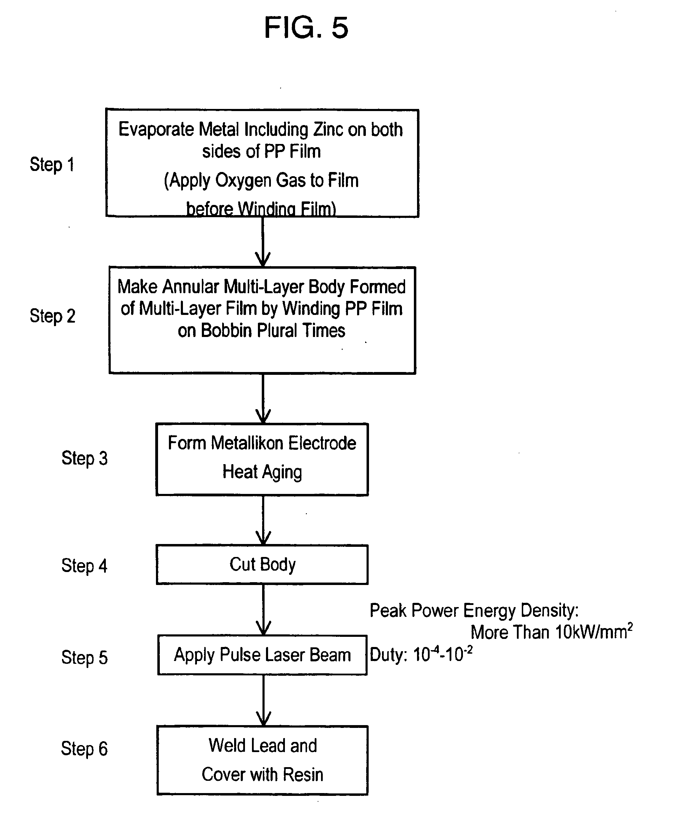

Fig. 1 is a perspective view of a multi-layer film capacitor element according to Exemplary Embodiment 1. Fig. 2 is a sectional view of the capacitor element. Fig. 3 is a sectional view of the capacitor element. Fig. 4 is an enlarged view of an evaporated film near a cut surface of the capacitor element.
A configuration of a multi-layer film capacitor according to Embodiment 1 will be described in detail with reference to Figs. 1 to 4.
In Fig. 1, multi-layer polypropylene film 2 having both sides metallized and non-metallized polypropylene film 3 are provided between two sprayed-metal electrodes 1 formed by thermal spraying of zinc. Capacitor element 11 has cut surface 7.
As shown in Fig. 2, metal layer 4 including zinc is evaporated on both sides of polypropylene film 8. According to Embodiment 1, the both-side-metallized polypropylene film 2 having polypropylene film 8 and metal layer 4 evaporated on both sides of the film and the non-metallized polypropylene film 3 without metal evaporated on the film are alternately stacked in plural layers. The polypropylene film 8 being dielectric has a thickness of $6\mu$m. Insulating sheet 5 protects the capacitor element 11. The figure shows a clearance between the films, but actually in the capacitor element 11, the films stacked in layers while contacting each other.
In Fig. 3, the evaporated metal of both-side metallized polypropylene film 2 is removed at portion 6 by pulse YAG laser beam having a wavelength of 1.06$\mu$m. Fig. 4 shows an optical microscopic photo of the portion 6 where evaporated metal is removed from the surface of both-side-metallized polypropylene film 2. The evaporated metal is not provided on the film 2 at an area extending from the cut surface 7 by about 0.1mm.
The method for manufacturing the multi-layer film capacitor of Embodiment 1 will be described with reference to Fig. 5. First, metal 4 including zinc is evaporated in vacuum on both sides of polypropylene film 8 to provide both-side-metallized polypropylene film 2 (Step 1). During the evaporation, the both-side-metallized polypropylene film 2 is wound up while having oxygen gas applied to the surface in a vacuum tank just before wound up after the evaporation.
Oxygen gas is applied to the film for the following reason.
It is well known that it is difficult to evaporate the metal 4 including zinc on both sides of polypropylene film 8 since polypropylene is inferior to polyethylene terephthalate in adhesion property against the evaporated layer. The evaporated metals between the films after evaporation contact each other, thus causing the evaporated metals to remove from the film during the winding at the later process, i.e., a blocking phenomenon occurs.
The blocking phenomenon occurs since the both-side-metallized polypropylene film 2 is wound up in vacuum without contacting oxygen to oxidize the film. According to Embodiment 1, the oxygen gas is applied to the film before the winding in order to oxidize the surface of the evaporated film. Thus, the blocking phenomenon does not occur. The oxidizing of the surface of the evaporated film provides the film with an excellent moisture resistance. Since the oxidized film on the evaporated film produced by the oxidation is thin, having a thickness of angstrom, thus is not shown in Figs. 1 to 3.
As described above, the oxygen gas provides a high-quality film oxide that is important for suppressing corrosion of the metallized film and preventing the blocking phenomenon.

Then, both-side-metallized polypropylene film 2 and non-metallized polypropylene film 3 are placed one on another and are wound by plural times on a cylindrical bobbin having a diameter of 600mm, thus providing an cylindrical winding body (Step 2).

Sprayed-metal electrode 1 of zinc is thermally sprayed to both sides of the cylindrical winding body. Then, the cylindrical winding body is subjected to heat aging at a temperature of 105°C for 12 hours (Step 3).

Next, the cylindrical winding body after the aging is cut with a rotary saw (Step 4) to be divided into plural capacitor elements. at this moment, the cylindrical winding body is cut by a rotary saw (material: SKH) having a diameter of 131mm and a blade of a thickness of 0.8mm having 68 teeth with sharp cutting edges. This process allows the cut surface to be easily processed later by laser beam, and reduces material loss due to the cutting of the body, thus providing a multi-layer film capacitor having a small tanδ characteristic.

The rotary saw rotates at a rotating speed of 300rpm and a cutting speed (blade feeding speed) of 1200mm/min. Then, the cutting distance per tooth is:

$$1200/(68\times300)=0.059\mathrm{mm}.$$

This condition prevents the cut surface from melting due to frictional heat and prevents a melt deposit of material of the capacitor element from being generated on the cut surface, thus allowing to perform laser beam machining.

Next, pulse laser beam of YAG laser (Matsuo Sangyo Co., Ltd.) is applied to the cut surface 7 of the capacitor element in order to remove metal exposed on the cut surface 7 and the metal evaporated on the surface of the film near the cut surface by 0.1 mm (Step 5). The laser beam of the YAG laser has a wave length of $1.06\mu$m and a spot diameter of 0.1mm. Since the laser beam having the wave length of $1.06\mu$m is not absorbed into dielectric polypropylene, the cut surface can be processed without giving thermal damage to the polypropylene film.

According to Embodiment 1, the laser beam applied has a pulse width of 160ns a frequency of 15kHz, and an energy density of a pulse peak of 522kW/mm$^2$. The product of the pulse width and the frequency, i.e., a duty is $2.4\times10^{-3}$. The laser beam is scanned by a galvano mirror and is applied to the cut surface 7. At this moment, the laser beam is scanned at a scanning speed of 1000mm/sec., and the scanning line is shifted by 0.05 mm pitch each for executing the laser beam machining over the entire cut surface 7.

Under the above conditions for applying the beam, the evaporated metal including zinc is removed from the cut surface by a distance not shorter than 0.05mm by the laser beam without giving thermal damage to the polypropylene film.

Fig. 4 shows a photo of the both-side-metallized polypropylene film 2 near the cut surface 7. This photo clearly shows that the evaporated aluminum and zinc alloy is removed from the cut surface uniformly by about 0.1mm. Further, according to analysis by an energy dispersion type X-ray analyzer (JEOL Ltd.), metallic element, such as zinc and aluminum, does not exist on the cut surface 7 to which the laser beam has been applied.

Next, a lead electrode is welded to the sprayed-metal electrode 1, and the capacitor element is covered with epoxy resin to provide the multi-layer film capacitor (Step 6). While the element is covered with epoxy resin, the epoxy resin intrudes into a fine gap between the films at a portion near the cut surface 7 where the evaporated metal is removed, thus improving a withstand voltage of the capacitor.

As set forth above, a multi-layer film capacitor having a high withstand voltage according to Embodiment 1 is manufactured.

The evaporated metal does not exist by a distance of about 0.1mm from the cut surface 7 of the capacitor element 11 in the photo of Fig. 4. The distance is about 16.7 times the thickness of $6\mu$m of the polypropylene film 8 serving as a dielectric layer.

According to Embodiment 1, a multi-layer capacitor can be obtained by cutting the multi-layer body of the stacked films manufactured by winding the film on the cylindrical bobbin. According to Embodiment 1, a jig for manufacturing the body or the shape of the body shape is not limited to that described. For example, the film may be wound around a jig having a plate shape, and then, a winding body of multi-layer films obtained by removing the jig is pressed. Then, sprayed-metal electrodes may be formed on both sides of the winding body to provide the multi-layer body to be cut.

According to Embodiment 1, the both-side-metallized polypropylene film 2 with metal evaporated on its both sides and the non-metallized polypropylene film 3 without a metal layer are alternately stacked. However, plural polypropylene films each having metal evaporated on a single side of each film may be stacked, thus providing similar effects.

According to Embodiment 1, zinc-aluminum alloy is evaporated at a uniform thickness on the entire surface of film, but the thickness is not limited to this. For example, heavy edge evaporation in which a thickness of the evaporated metal near a portion contacting sprayed metal is increased may preferably be employed since improving a contact resistance with sprayed metal.

According to Embodiment 1, the evaporated metal includes aluminum-zinc alloy, but may include other metal including zinc. For example, the metal including zinc may preferably include copper, gold, silver, chrome, magnesium, or manganese.

According to Embodiment 1, the evaporated metal is removed by about 0.1mm from the cut surface, but may be removed by an amount based on a rated voltage of the capacitor.

A cutting distance per tooth of the saw is preferably not shorter than 0.03mm. A cutting distance not longer than 0.03mm makes polypropylene melt because of considerable friction during the cutting. The cutting distance may become shorter than 0.03mm by increasing the number of rotation, by reducing the rotating speed, and by increasing the number of the teeth of the saw. This distance less than 0.03mm allows a melt deposit of the film generated due to frictional heat to stick on the cut surface. Under such conditions, the evaporated film cannot be efficiently removed by laser beam and the melt deposit of the film increases $\tan\delta$.

According to Embodiment 1, the YAG laser beam having the wavelength of 1.06$\mu$m is employed, but the wavelength is not limited to this to make the evaporated metal be evaporated, dispersed, and removed. Laser beam having particularly a wave length ranging from 0.5$\mu$m to 2$\mu$m is preferable for zinc and aluminum.

According to Embodiment 1, the laser beam has the pulse width of 160ns, but it is not limited to this. The pulse width may be preferably determined such that the polypropylene film is not thermally damaged and that a time for manufacturing the capacitor is not increased. As above, the pulse width is preferably determined to range from 30ns to 1$\mu$s. A wavelength not smaller than 1$\mu$s increases the thermal damage to the film, thus not suitable for achieving a purpose of the present invention.

Table 1 shows $\tan\delta$ (@1kHz), an AC breakdown voltage in a withstand voltage test, and a capacitance reduction rate after 2000hours of life test for a capacitor according to Embodiment 1. The data in Table 1 are average values of five samples. In Table 1, the breakdown voltage in the withstand voltage test is a voltage corresponding to the capacitance reduction rate of 20%. The capacitance reduction rate after the life test was evaluated by measuring the electrostatic capacitance of the capacitor at a room temperature after 2000hours of continuous application of AC550V at 60Hz in a high temperature tank at 70°C.

Table 1

|  | $\tan\delta$ | Breakdown Voltage (V) | Capacitance Reduction Rate (%) |
|---|---|---|---|
| Embodiment 1 | 0.035 | AC850 | 0.94 |
| Embodiment 2 | 0.071 | AC900 | 0.23 |
| Embodiment 3 | 0.055 | AC1050 | 0.85 |
| Embodiment 4 | 0.042 | AC830 | 1.02 |
| Embodiment 5 | 0.034 | AC1000 | 0.83 |
| Comparative Example 1 | 0.105 | AC400 | 52.10 |
| Comparative Example 2 | 0.250 | AC300 | 73.25 |
| Comparative Example 3 | 0.095 | AC650 | 5.30 |
| Comparative Example 4 | 0.088 | AC680 | 4.30 |
| Comparative Example 5 | 0.040 | AC1150 | 15.23 |
| Comparative Example 6 | 0.13 | AC700 | 8.20 |
| Comparative Example 7 | 0.15 | AC450 | 57.20 |
| Comparative Example 8 | 0.90 | AC1100 | 5.20 |
| Comparative Example 9 | 0.07 | AC660 | 4.10 |

Exemplary Embodiment 2

According to Exemplary Embodiment 2, evaporated metal of the both-side-metallized polypropylene film employs copper cored zinc (zinc with copper evaporated as core) instead of aluminum-zinc alloy used in Embodiment 1. The metal evaporated on the polypropylene film includes 99.2wt% of zinc and 0.8wt% of copper.

According to Embodiment 2, a multi-layer film capacitor is manufactured by Step 1 through Step 6 of Embodiment 1 except material of the evaporated metal.

According to Embodiment 2, it has been confirmed with an optical microscope, similarly to Embodiment 1, that the evaporated metal is uniformly removed from the cut surfaces at an area by a distance of about 0.09mm.

Table 1 shows tanδ (@1KHz), a breakdown voltage in a withstand voltage test, and a capacitance reduction rate after lapse of 2000hours of the capacitor manufactured according to Embodiment 2.

Exemplary Embodiment 3

A multi-layer film capacitor according to Exemplary Embodiment 3 is manufactured by Step 1 through Step 4 of Embodiment 1. In Step 5, pulse laser beam is applied to a cut surface of a capacitor element by a machining system of Nihon Laser System Co., Ltd. in order to remove exposed metal on the cut surface and the evaporated metal on a surface of the film near the cut surface. The laser beam has a wavelength of 1.06μm and a spot diameter of 0.5mm.

The laser beam applied has a pulse width of 200ns, a frequency of 3kHz, and a energy density of 60kW/mm$^2$ per pulse peak. The product (duty) of the pulse width and the frequency is $64\times10^{-4}$. The laser beam is scanned by a galvano mirror and is applied to the entire surface of the cut surface. The laser beam is scanned at a scanning speed of 600mm/sec., and the scanning line is shifted by 0.3mm pitch.

According to Embodiment 3, it was confirmed with an optical microscope, similarly to Embodiment 1, that evaporated aluminum-zinc alloy is uniformly removed from the cut surface at an area by about 0.15mm.

Table 1 shows tanδ (@1kHz), a breakdown voltage in a withstand voltage test, and a capacitance reduction rate after lapse of 2000hours of the capacitor according to Embodiment 3.

Exemplary Embodiment 4

A multi-layer film capacitor according to Exemplary Embodiment 4 is manufactured by the same method as of Embodiment 1 except Step 4.

A cutting operation at Step 4 according to Embodiment 4 will be described. A capacitor element is cut with a rotary saw having a diameter of 131 mm, a thickness of 0.8mm, and having sixty-eight teeth with sharp cutting edges made of SKH material. The rotary saw operates at a rotating speed of 600rpm and a cutting speed (feeding speed) of 1600mm/min. A cutting distance per tooth is 0.039mm. Under these conditions, the cut surface is prevented from melting due to frictional heat, thus reducing an amount of melt deposit of material of the capacitor on the cut surface.

According to Embodiment 4, it has been confirmed with an optical microscope, similarly to Embodiment 1, that evaporated aluminum-zinc alloy is uniformly removed from the cut surface at an area by about 0.08mm.

Table 1 shows tanδ (@1 kHz), a breakdown voltage in a withstand voltage test, and a capacitance reduction rate after lapse of 2000hours of the capacitor according to Embodiment 4.

Exemplary Embodiment 5

A multi-layer film capacitor according to Exemplary Embodiment 5 is manufactured by the same method as of Embodiment 1 except Step 4 of Embodiment 1.

At Step 4 according to Embodiment 5, a rotary chip saw with sharp cutting edges, having a diameter of 150mm, eighty teeth, and a thickness of 0.8mm was used. The rotary saw operated at a rotating speed of 500rpm and a cutting speed (feeding speed) of 2000mm/min. Then, a cutting distance per tooth was 0.05mm. Under these conditions, the cut surface from melting due to frictional heat, thus reducing an amount of melt deposit of material of the capacitor on the cut surface.

According to Embodiment 5, it has been confirmed by an optical microscope, similarly to Embodiment 1, that evaporated aluminum-zinc alloy is uniformly removed from the cut surface at an area by about 0.12mm.

Table 1 shows tanδ (@1 kHz), a breakdown voltage in a withstand voltage test, and a capacitance reduction rate after lapse of 2000hours of the capacitor manufactured according to Embodiment 5.

Comparative Example 1

A multi-layer film capacitor of comparative example 1 was manufactured similarly to Embodiment 1 except that laser beam was not applied at Step 5. Table 1 shows tanδ (@1 kHz), a breakdown voltage in a withstand voltage test, and a capacitance reduction rate after lapse of 2000hours of the capacitor.

Comparative Example 2

A multi-layer film capacitor of comparative example 2 was manufactured similarly to Embodiment 1 except that laser beam was not applied at Step 5. Table 1 shows tanδ (@1 kHz), a breakdown voltage in a withstand voltage test, and a capacitance reduction rate after lapse of 2000hours of the capacitor.

Comparative Example 3

For a capacitor of comparative example 3, plural capacitor elements were obtained similarly to Embodiment 1 except that a cylindrical winding body after aging was cut with a rotary saw having cutting edges slightly rounded at Step 4. The rotary saw, differently from Embodiment 1, operated at a rotating speed of 1000rpm, a cutting speed of 300mm/min, and a cutting distance per tooth of 0.0044mm. The tooth has a thickness of 1.2mm, and has a cutting edge chamfered by a width of 0.005mm. Under these conditions, a cut surface melted, thus causing melt deposit (mixed melt) of material of a film material to be deposited on the cut surface.

In the capacitor of comparative example 3, an evaporated metallized film and evaporated aluminum-zinc alloy was removed only by an area by about 0.02mm from the cut surface.

Table 1 shows tan$\delta$ (@1 kHz), a breakdown voltage in a withstand voltage test, and a capacitance reduction rate after lapse of 2000hours of the capacitor of comparative example 3.

Table 2 shows the relationship between cutting conditions (cutting edge machined or not, and a cutting distance per tooth) and the breakdown voltage according to Embodiments 1, 4, and 5 and comparative example 3 using the same evaporated electrode material.

Table 2

|  | Machining for Cutting Edge | Cutting Distance per Tooth (mm) | Breakdown Voltage (V) |
|---|---|---|---|
| Embodiment 1 | None | 0.059 | AC850 |
| Embodiment 4 | None | 0.039 | AC830 |
| Embodiment 5 | None | 0.05 | AC 1000 |
| Comparative Example 3 | Rounded | 0.0044 | AC650 |
| Comparative Example 4 | None | 0.0044 | AC680 |

Comparative Example 4

For a capacitor of comparative example 4, plural capacitor elements were obtained similarly to Embodiment 1 except that cutting conditions for a winding body after aging were different. A saw used for cutting the body has cutting edges as sharp as those of Embodiment 1. Under these cutting conditions, a rotating speed was 1000rpm, and a cutting speed (feeding speed) was 300mm/min. A cutting distance per tooth was 0.044mm. Even in the case that the cutting edge is sharp, if the cutting distance per tooth is short as mentioned above, then the cut surface melted, thus causing melt deposit (mixed melt) of material of a film to be deposited on a cut surface.

In the capacitor of comparative example 4, a evaporated metal film and evaporated aluminum-zinc alloy were removed only by about 0.03mm from the cut surface. Table 1 shows tan$\delta$ (@1 kHz), a breakdown voltage in a withstand voltage test, and a capacitance reduction rate after lapse of 2000hours of the capacitor of comparative example 4.

Table 2 shows the relationship between cutting conditions (cutting edge machined or not, and a cutting distance per tooth) and the breakdown voltage of the capacitors of Embodiments 1, 4, and 5 and comparative example 4 using the same evaporated electrode material.

Comparative Example 5

A multi-layer film capacitor of comparative example 5 was manufactured similarly to Embodiment 1 except that evaporated metal of a both-side-evaporated polypropylene film employs only aluminum instead of aluminum-zinc alloy of Embodiment 1.

Table 1 shows tan$\delta$ (@1 kHz), a breakdown voltage in a withstand voltage test, and a capacitance reduction rate after lapse of 2000hours of the capacitor of comparative example 5.

Comparative Example 6

A multi-layer film capacitor of comparative example 6 was manufactured similarly to Embodiment 1 except that a pulse peak energy density was 5kW/mm$^2$ at Step 5 of Embodiment 1.

In the capacitor of comparative example 6, an evaporated metal film and evaporated aluminum-zinc alloy were removed only by about 0.01mm from a cut surface.

Table 1 shows tanδ (@1 kHz), a breakdown voltage in a withstand voltage test, and a capacitance reduction rate after lapse of 2000hours of the capacitor of comparative example 6.

Comparative Example 7

A multi-layer film capacitor of comparative example 7 was manufactured similarly to Embodiment 1 except that laser beam has a pulse width adjusted to 1ms by a laser diode having a wavelength of 0.9μm at Step 5 of Embodiment 1. A duty was 1.5x10.

In the capacitor of comparative example 7, traces of burn were generated on a cut surface due to thermal damage, and smoke is produced from the cut surface during laser beam was applied.

Table 1 shows tanδ (@1 kHz), a breakdown voltage in a withstand voltage test, and a capacitance reduction rate after lapse of 2000hours of the capacitor of comparative example 7.

Comparative Example 8

A multi-layer film capacitor of comparative example 8 was manufactured similarly to Embodiment 1 except that oxygen gas was not applied to a both-side-evaporated polypropylene film at Step 1 of Embodiment 1.

Table 1 shows tanδ (@1 kHz), a breakdown voltage in a withstand voltage test, and a capacitance reduction rate after lapse of 2000hours of the capacitor of comparative example 8.

Comparative Example 9

A multi-layer film capacitor of comparative example 9 was manufactured similarly to Embodiment 1 except Step 5.

At Step 5 for the capacitor of comparative example 9, laser beam was applied to a cut surface of a capacitor element by a short pulse laser system of flash lamp type. Metal exposed on the cut surface and evaporated metal on a surface of the film near the cut surface were removed. The laser beam has a wavelength of 1.06μm and a spot diameter of 0.5mm.

The laser beam had a pulse width of 4ns, a frequency of 20Hz, and an energy density per pulse peak of 4000kW/mm$^2$. The product of the pulse width and the frequency (duty) was $8 \times 10^{-8}$. A sample was placed on an X-Y table, and the laser beam is applied to the entire surface of the cut surface while the table moved at a speed of 80mm/sec.

In the capacitor of comparative example 9, since the pulse width was extremely short, 4ns, aluminum-zinc alloy was removed only by 0.02mm from the cut surface. In order to remove it by a distance not shorter than 0.05mm to provide the capacitor with a withstand voltage not lower than AC700V, it is necessary to apply a lot of pulses one upon another or to apply laser beam plural times, thus requiring a lot of time for finishing the cut surface.

Table 1 shows tanδ (@1 kHz), a breakdown voltage in a withstand voltage test, and a capacitance reduction rate after lapse of 2000hours of the capacitor of comparative example 9.

Performance Evaluation

The capacitor according to Embodiment 1 has smaller tanδ and a higher breakdown voltage higher than that of the capacitor of comparative example 1 in which a pulse laser beam is not applied. Thus, the capacitor of Embodiment 1 has characteristics better than those of the capacitor of comparative example 1 since having evaporated metal precisely removed by 0.1mm from a cut surface by the pulse laser beam applied. The multi-layer film capacitor according to Embodiment 1, having the withstand voltage of AC850V, can be used with a rated voltage ranging from AC400V to 500V

The capacitor according to Embodiment 1 has smaller tanδ and a higher breakdown voltage than the capacitor of comparative example 3 in which the cutting operation is performed by friction. The capacitor of Embodiment 1, since having less melt material of the film capacitor material stick on the cut surface than the capacitors of comparative examples 3 and 4, the laser beam uniformly reach the surface easily, thus precisely removing evaporated metal, and thereby, excellent characteristics can be attained.

The capacitors of comparative examples 3 and 4 has breakdown voltages lower than that of the capacitor of Embodiment 1 since a melt deposit on the cut surface prevents the laser beam from being applied and prevents the evaporated film from evaporating. If the cut surface is covered with the melt deposit, gas generated due to self-healing on a surface of the film hardly goes out of cut ends, thus affecting restoration of insulation.

The capacitor of Embodiment 1 has tanδ smaller than that of the capacitor of comparative example 3 since including the winding body cut while friction is suppressed as much as possible with the saw having sharp cutting edges for the cutting. Further, evaporated metal near the cut surface is removed by applying the laser beam, thus contributing to increasing of insulation resistance of the capacitor, thereby effectively lowering tanδ.

The sharp cutting edge used for the cutting reduces chips produced during the cutting, thus reducing material loss.

The capacitors of comparative examples 3 and 4 have tanδ larger than that of the capacitor of Embodiment 1 since the evaporated metal film near the cut surface is cracked or expanded due to heat and physical vibration generated during the cutting operation, thus increasing a resistance of the evaporated metal film.

The capacitor of Embodiment 1 has a smaller capacitance reduction rate in the life test than the capacitor of comparative example 5 including the evaporated metal of only aluminum. A reason for this is that the evaporated metal employs aluminum-zinc alloy including only about 5wt% of aluminum, thus improving characteristics. Zinc hardly evaporates alone since having poor adhesion to polypropylene. The two-metal evaporation of aluminum and zinc enables the evaporation of zinc. In this case, as shown in Embodiment 1, aluminum may be preferably included not more than 10wt% in order to reduce the capacitance reduction rate in use for a long period of time.

The capacitor of Embodiment 1 has larger tanδ, a higher breakdown voltage, and a smaller capacitance reduction rate in life test than the capacitor of comparative example 6. The breakdown voltage of the capacitor of comparative example 6 is lower since a peak power energy density of the laser beam is smaller, and since the amount of an evaporated film removed is less. It has been experimentally confirmed that the peak power energy density is preferably not smaller than $10kW/mm^2$.

The capacitor of Embodiment 1 has smaller tanδ, a higher breakdown voltage, and a smaller capacitance reduction rate in life test than the capacitor of comparative example 7. A reason for this is that the capacitor of comparative example 7 has laser beam applied having a larger pulse width, resulting in a larger duty, thus generating thermal damage to the film. The thermal damage becomes greater since a cooling time is shortened as the pulse width becomes larger.

The capacitor of Embodiment 1 has a smaller capacitance reduction rate in life test than the capacitor of comparative example 8 in which oxygen gas is not applied to a surface of the evaporated film during evaporation. In the capacitor of comparative example 8, a blocking phenomena (peeling of evaporated film) occurs on the metallized film of the capacitor, thus reducing the capacitance more than that of Embodiment 1 since stable oxide is not formed on the evaporated film during evaporation. Such blocking phenomena triggers deterioration and reduces the capacitance.

The capacitor of Embodiment 1 has smaller tanδ, a higher breakdown voltage, and a smaller capacitance reduction rate in life test than the capacitor of comparative example 9. The reason for poor characteristics of the capacitor of comparative example 9 is that the pulse width of the laser beam is too small, and thus, the evaporated film is not sufficiently removed. When laser beam having a pulse width not longer than 30ns is used as in the capacitor of comparative example 9, the distance from the cut surface that can be removed by each application of the laser beam is about a few micrometers, which does not provide a withstand voltage not lower than a rated voltage of AC350V required for the capacitor. Accordingly, it is necessary to apply a lot of spots for obtaining a high withstand voltage, thus increasing a time for manufacturing. Therefore, it is clear that laser beam having a short pulse width not longer than 30ns is not suitable for the mass-production of multi-layer film capacitors for high voltages.

The capacitor of Embodiment 2 has a breakdown voltage much higher than that of the capacitance of comparative example 2 since having the evaporated metal removed by 0.02mm from the cut surface with pulse laser beam. As shown in Table 1, evaporated metal of copper cored zinc, since not including aluminum, provides a breakdown voltage right after the cutting is about AC300V, extremely low, as shown in the capacitor of comparative example 2. However, the capacitor of Embodiment 2 has the evaporated metal removed by about 0.2mm from the cut surface, thus having the high breakdown voltage increased to about AC900V

The capacitor of Embodiment 2, since having the evaporated metal not including aluminum, has the least capacitance reduction rate in life test of all capacitors.

The capacitor of Embodiment 3 has smaller tanδ, a higher breakdown voltage, and a small capacitance reduction rate in life time than the capacitors of comparative examples 1 and 3-9, similarly to the capacitor of Embodiment 1. Thus, the capacitor of Embodiment 3 has better characteristics than those of the capacitors of the comparative examples since having the evaporated metal removed precisely by 0.2mm from the cut surface by the pulse laser beam applied.

The capacitor of Embodiment 4 has smaller tanδ, a higher breakdown voltage, and a smaller capacitance reduction rate in life time than the capacitors of comparative examples 1 and 3-9, similarly to the capacitor of Embodiment 1. Thus, the capacitor of Embodiment 4 has better characteristics than the capacitors of the comparative examples since having the evaporated metal precisely removed by 0.08mm from the cut surface by the pulse laser beam applied.

The capacitor of Embodiment 5 has smaller tanδ, a higher breakdown voltage, and a smaller capacitance reduction rate in life time than the capacitors of comparative examples 1 and 3-9, similarly to the capacitor of Embodiment 1. Thus, the capacitor of embodiment 5 has better characteristics than the capacitors of the comparative examples since the evaporated metal precisely removed by 0.12mm from the cut surface by the pulse laser beam applied.

As shown in Table 1, the multi-layer film capacitors manufactured by the methods according to Embodiments 1-5 has improved withstand voltages, and thus, can be used at voltages not lower than AC350V, thus assuring high reliability and productivity.

As shown in Table 1, in the manufacturing of the multi-layer film capacitors of Embodiments 1-5, the mother capacitor is cut with the rotary saw having the cutting edges not chamfered or rounded. This allows the capacitor to have small tanδ-characteristic and can be manufactured with a high yield.

As shown in Table 1, in the manufacturing of the multi-layer film capacitors of Embodiments 1-5, the mother capacitor is cut with the saw having the cutting distance per tooth not shorter than 0.03mm. Therefore, the capacitor has small tanδ-characteristic and can be manufactured with a high yield.

As shown in Table 1, in the manufacturing of the multi-layer film capacitors including the both-side-metallized polypropylene films according to Embodiments 1-5, oxygen gas is applied to at least one side of each film when zinc-contained metal is evaporated in a vacuum tank. This allows multi-layer polypropylene film capacitors to be manufactured having stable characteristics and high productivity.

Exemplary Embodiment 6

A multi-layer film capacitor according to Exemplary Embodiment 6 includes polypropylene film 8, a dielectric layer of the capacitor, having a thickness of 6μm and the distance of portion 6 where evaporated metal is not provided is 0.10mm from cut surface 7 of capacitor element 11.

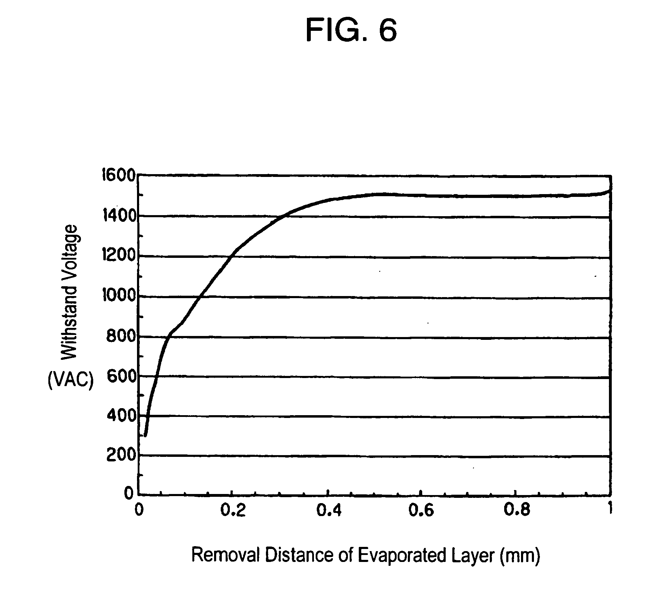

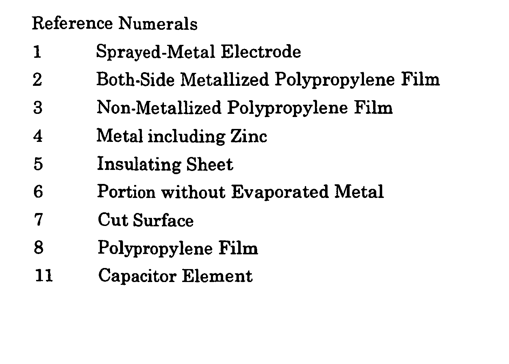

Polypropylene film 8 having a thickness not larger than 10μm which is generally used for a metallized film capacitor having a rated voltage not lower than AC350V in Embodiment 6 will be described in detail. Fig. 6 shows the relationship between the distance of the portion where evaporated metal is not provided from the cut surface of the multi-layer film capacitor, and a withstand voltage of the capacitor. The capacitor includes metallized polypropylene film including the polypropylene film 8, a dielectric layer, having a thickness of 6μm. As shown in the graph, the portion 6 where the evaporated metal is not provided requires a distance not shorter than 0.05mm for obtaining a withstand voltage not lower than AC700V. The distance is about 8.3 times the thickness of 6μm of film 8 in the capacitor of Embodiment 1. The distance is about 10 times the thickness of 5μm of film 8. Further, the distance is about 5 times the distance for a multi-layer film capacitor including film 8 having a thickness of 10μm.

If the distance of the portion 6 where evaporated metal is not provided from the cut surface 7 of the capacitor element 11 exceeds 0.5mm, a withstand voltage of the cut surface 7 of the capacitor element 11 is substantially constant at AC1500V. This voltage is about 4.3 times the rated voltage of AC350V, which is adequately about two times the withstand voltage of a capacitor having a rated voltage of AC750V. The distance is about 8.3 times the thickness of 6μm of polypropylene film 8 of the capacitor of Embodiment 1. The distance is about 100 times the thickness of 5μm of film 8. Further, the distance is about 50 times the thickness of 10 μm.

The graph shows that the capacitor element 11 has the cut surface having a withstand voltage not higher than the withstand voltage of polypropylene film 8 if the withstand voltage of the cut surface 7 of the capacitor element 11 is not higher than AC1500V, that is, if the distance of portion 6 where the evaporated metal is not provided is not longer than 0.5mm. Further, the graph shows that the withstand voltage becomes higher according to an increase of the distance of the portion 6 where the evaporated metal is not provided. If the withstand voltage of the cut surface 7 of the capacitor element 11 exceeds AC1500V, that is, if the distance of the portion 6 without evaporated metal is not shorter than 0.5mm, the withstand voltage of polypropylene film 8 is not higher than the withstand voltage of cut surface 7 of the capacitor element 11. From the viewpoints of the withstand voltage of a capacitor and reducing of the size of a capacitor, the distance without the evaporated metal on surface 7 is preferably increased.

A film capacitor having a rated voltage not lower than AC350V can be obtained by determining the distance of the portion 6 without the evaporated metal from cut surface 7 of the capacitor 11 to range from 5 to 100 times the thickness of polypropylene film 8. As a result, the withstand voltage of the cut surface 7 of the capacitor element 11 is high enough against the rated voltage of the capacitor, which is also desirable because the capacitor can has a small size. However, if the distance of portion 6 without the evaporated metal from cut surface 7 of the capacitor element 11 is not longer than 5 times the thickness of the polypropylene film 8, the withstand voltage of the cut surface 7 of the capacitor element 11 becomes insufficient. Also, if the distance of portion 6 without the evaporated metal from cut surface 7 of the capacitor element 11 exceeds 100 times the thickness of the polypropylene film 8, the capacitor element 11 increases the size.

According to Embodiment 1, the polypropylene film 8 of the capacitor has a thickness of 6μm, and evaporated metal is not provided in a distance of 0.1mm from cut surface 7 of the capacitor element 11. Even if the polypropylene film 8, a dielectric layer, of both-side metallized polypropylene film 2 changed in its thickness according to the rated voltage of the capacitor, a small-sized multi-layer film capacitor of high productivity can be provided by determining the distance of portion 6 without the evaporated metal from cut surface 7 of the capacitor element to range from 5 to 100 times the thickness of polypropylene film 8, a dielectric layer of film 2.

The method of forming the portion 6 where the evaporated metal is not provided from cut surface 7 of the capacitor element 11 is not limited to the above method. The method may be selected from various methods, such as removing of the evaporated metal by laser beam, removing of the evaporated metal through chemical selection, removing of the evaporated metal by plasma etching, and previous forming of a non-evaporated portion to be cut off when metal is evaporated on the polypropylene film, and then cutting the non-evaporated portion of the mother capacitor. In consideration particularly of an accurate distance from the cut surface where the evaporated metal is removed and productivity, the laser beam may be preferably used.

Exemplary Embodiment 7

A multi-layer film capacitor according to exemplary Embodiment 7 is identical to that of Embodiment 6 except that polypropylene film 8, a dielectric layer, of the capacitor has a thickness of 10μm and that the distance of portion 6 without evaporated metal from cut surface 7 of the capacitor element 11 is 0.05 mm.

Exemplary Embodiment 8

A multi-layer film capacitor according to Exemplary Embodiment 8 is identical to that of Embodiment 6 except that polypropylene film 8, a dielectric layer, has a thickness of 5μm and that the distance of portion 6 without evaporated metal from cut surface 7 of the capacitor element 11 is 0.5mm.
Table 3 shows withstand voltages measured of the capacitors manufactured according to Embodiments 7 and 8.

Table 3

| | Thickness T of Dielectric Film (μm) | Distance D from Cut Surface (mm) | D/T | Breakdown Voltage (V) |
|---|---|---|---|---|
| Embodiment 6 | 6 | 0.10 | 10.7 | AC850 |
| Embodiment 7 | 10 | 0.05 | 5 | AC700 |
| Embodiment 8 | 5 | 0.5 | 100 | 100 AC1050 |
| Comparative Example 10 | 6 | 0 | 0 | AC520 |
| Comparative Example 11 | 6 | 0.02 | 3.3 | AC380 |

Comparative Example 10

A multi-layer film capacitor of comparative example 10 is identical to that of Embodiment 6 except that cut surface 7 of capacitor element 11 of the capacitor of Embodiment 6 melts. The melt portion of polypropylene film 8 is deposited on the cut surface 7 of the capacitor element 11, and evaporated metal is provided near the cut surface 7.

Comparative Example 11

A multi-layer film capacitor of comparative example 11 is identical to that of Embodiment 6 except that the distance of portion 6 without evaporated metal from cut surface 7 is 0.02mm. The distance is about 3.3 times the thickness of polypropylene film 8, a dielectric.
Table 3 shows withstand voltages of the capacitors of comparative examples 10 and 11.

Performance Evaluation

The capacitor of Embodiment 6 can be used at a rated voltage up to about AC425V since having the breakdown voltage of AC 850V obtained in the withstand voltage test.
The capacitor of Embodiment 7 is influenced by dielectric breakdown in the cut surface 7 of the capacitor element 11, and has the breakdown voltage of AC750V. The capacitor can be used with a rated voltage of about AC350V.
The capacitor of Embodiment 8 is little influenced by dielectric breakdown in the cut surface 7 of the capacitor element 11, but is influenced by the dielectric breakdown of polypropylene film 8. The capacitor has the breakdown voltage of AC1080V, and thus, can be used at a rated voltage of about AC540V.
In the capacitor of comparative example 10, the melt deposit on cut surface 7 of the capacitor element 11 improves its withstand voltage a little, and the breakdown voltage is AC520V. The capacitor can be used at a rated voltage of about AC260V, but a target rated voltage not lower than AC350V cannot be obtained because of a little allowance of breakdown voltage.

In the capacitor of comparative example 11, since the distance of portion 6 without evaporated metal from cut surface 7 of the capacitor element 11 is small, 0.02mm, the breakdown voltage is AC380V. Since having the breakdown voltage not high enough, the capacitor does not satisfy the required rated voltage not lower than AC350V similarly to that of comparative example 10.

In the multi-layer film capacitors of Embodiments 6 to 8, the evaporated metal is not provided in a distance 5 to 100 times the thickness of the polypropylene film from the cut surface of the capacitor element cut out of the mother capacitor. Therefore, the capacitor element has the withstand voltage at its cut surface not lower than AC700V, and further, can have a withstand voltage determined not to exceed the withstand voltage of the dielectric film overly.

In the multi-layer film capacitor of Embodiments 6 to 8, since the evaporated metal of the metallized polypropylene film includes zinc, even a thin dielectric film can provides the capacitor with a long-lasting reliability in use and a small size.

The multi-layer film capacitors of Embodiments 6 to 8 having rated voltages not lower than AC350V, which is higher than that of a conventional capacitor, has high reliability and a small size, and manufactured at high productivity.

INDUSTRIAL APPLICABILITY

A multi-layer film capacitor including a metallized polypropylene film according to the present invention can be used at a rated voltage not lower than AC350V, thus being reliable and small-sized, and assuring high productivity.

**Claims**

1. A method of manufacturing a multi-layer film capacitor, comprising the steps of:

    making a metallized polypropylene film by providing a metal layer (4) including zinc on a polypropylene film (8) by evaporation;
    making a multi-layer body including the metallized polypropylene film by stacking the metallized polypropylene film;
    forming sprayed-metal electrodes (1) on both sides of the multi-layer body; and
    providing a capacitor element by cutting the multi-layer body along a cut surface,
    **characterized by**
    applying pulse laser beam having a pulse width ranging from 30 ns to 1 $\mu$s to the cut surface (7) of the capacitor element to remove metal of the metal layer which is exposed on the cut surface and metal of the metal layer which is on a surface of the film near the cut surface by a distance not shorter than 0.05 mm from the cut surface, wherein said step of providing the capacitor element comprises cutting the multi-layer body with a rotary saw having cutting edges not chamfered or rounded.

2. The method of claim 1, wherein the pulse laser beam has a peak power energy density not smaller than 10 kW/mm$^2$.

3. The method of claim 1 or 2, wherein the pulse laser beam has a wavelength ranging from 0.5 to 2.0 $\mu$m, and a product of the pulse width and a frequency of the pulse laser beam ranges from 10$^{-4}$ to 10$^{-2}$.

4. The method of any one of claims 1 to 3, further comprising:

    providing a cylindrical winding body from the multi-layer body,
    wherein said step of providing the capacitor element comprises cutting the cylindrical winding body with the rotary saw.

5. The method of claim 4, wherein the rotary saw has a cutting distance per tooth not shorter than 0.03 mm.

6. The method of any one of claims 1 to 5, further comprising the step of applying oxygen gas to at least one side of the metallized polypropylene film, wherein the metallized polypropylene film is a both-side-metallized polypropylene film having the metal evaporated on both sides thereof.

7. The method of any one of claims 1 to 6, wherein said step of making the multi-layer body comprises winding the metallized polypropylene film to provide a cylindrical winding body.

**8.** A multi-layer film capacitor comprising:

a multi-layer member obtained by cutting a multi-layer body including a first polypropylene film (8) having a metal layer (4) provided by evaporation on a surface of said film forming a metalized polypropylene film, said multilayer member having first both sides (7) provided by said cutting and second both sides different from said first both sides, the metal layer including zinc;
**characterized by**
sprayed metal electrodes (1) provided on said second both sides of said multi-layer member, respectively; and an oxidized film provided on a surface of the metal layer (4) on at least one side of the metallized polypropylene film,
wherein the metallized polypropylene film is a both-side-metallized polypropylene film having the metal layer provided on both sides thereof, and
wherein said metal layer (4) has ends distanced by a distance not shorter than 0.05 mm from said first both sides (7) of said multi-layer member of said multi-layer body, respectively.

**9.** The multi-layer film capacitor of claim 8, wherein said multi-layer member further includes a second polypropylene film (3) to be stacked alternately on said metallized polypropylene film (8).

**Patentansprüche**

**1.** Verfahren zum Herstellen eines mehrschichtigen Folienkondensators, das die folgenden Schritte umfasst:

Fertigen einer metallisierten Polypropylen-Folie durch Schaffen einer Metallschicht (4), die Zink enthält, auf einer Polypropylen-Folie (8) durch Aufdampfen;
Fertigen eines mehrschichtigen Körpers, der die metallisierte Polypropylen-Folie enthält, durch Schichten der metallisierten Polypropylen-Folie;
Ausbilden von Spritzmetall-Elektroden (1) auf beiden Seiten des mehrschichtigen Körpers; und
Schaffen eines Kondensatorelementes durch Schneiden des mehrschichtigen Körpers entlang einer Schnittfläche,
**gekennzeichnet durch**
Anwenden eines Impuls-Laserstrahls mit einer Impulsbreite, die von 30 ns bis 1 $\mu$s reicht, auf die Schnittfläche (7) des Kondensatorelementes, um Metall der Metallschicht, das an der Schnittfläche freiliegt, und Metall der Metallschicht zu entfernen, das sich an einer Oberfläche der Folie in der Nähe der Schnittfläche in einem Abstand von nicht weniger als 0,05 mm von der Schnittfläche befindet,
wobei der Schritt des Schaffens des Kondensatorelementes Schneiden des mehrschichtigen Körpers mit einer Kreissäge mit Schneidkante umfasst, die nicht abgefast oder abgerundet ist.

**2.** Verfahren nach Anspruch 1, wobei der Impuls-Laserstrahl eine Spitzenleistungs-Energiedichte von nicht weniger als 10 kW/mm$^2$ hat.

**3.** Verfahren nach Anspruch 1 oder 2, wobei der Impuls-Laserstrahl eine Wellenlänge hat, die von 0,5 bis 2,0 $\mu$m reicht und ein Produkt der Impulsbreite und einer Frequenz des Impuls-Laserstrahls von 10$^{-4}$ bis 10$^{-2}$ reicht.

**4.** Verfahren nach einem der Ansprüche 1 bis 3, das des Weiteren umfasst:

Schaffen eines zylindrischen Wicklungskörpers aus dem mehrschichtigen Körper,
wobei der Schritt des Schaffens des Kondensatorelementes Schneiden des zylindrischen Wicklungskörpers mit der Kreissäge umfasst.

**5.** Verfahren nach Anspruch 4, wobei die Kreissäge eine Schneidstrecke pro Zahn von nicht weniger als 0,03 mm hat.

**6.** Verfahren nach einem der Ansprüche 1 bis 5, das des Weiteren den Schritt des Anwendens von Sauerstoffgas auf wenigstens einer Seite der metallisierten Polypropylen-Folie umfasst, wobei die metallisierte Polypropylen-Folie eine beidseitig metallisierte Polypropylen-Folie ist, auf die das Metall auf beiden Seiten aufgedampft ist.

**7.** Verfahren nach einem der Ansprüche 1 bis 6, wobei der Schritt des Fertigens des mehrschichtigen Körpers Wickeln der metallisierten Polypropylen-Folie umfasst, um einen zylindrischen Körper zu schaffen.

**8.** Mehrschichtiger Folienkondensator, der umfasst:

ein mehrschichtiges Element, das gewonnen wird, indem ein mehrschichtiger Körper geschnitten wird, der eine erste Polypropylen-Folie (8) mit einer Metallschicht (4) enthält, die durch Aufdampfen auf eine Fläche der Folie zum Ausbilden einer metallisierten Polypropylen-Folie geschaffen wird, wobei das mehrschichtige Element erste beide Seiten (7), die durch das Schneiden geschaffen werden, und zweite beide Seiten hat, die sich von den ersten beiden Seiten unterscheiden, und die Metallschicht Zink enthält;
**gekennzeichnet durch**
Spritzmetall-Elektroden (1), die jeweils an den zweiten beiden Seiten des mehrschichtigen Elementes vorhanden sind; und
einen oxidierten Film, der an einer Oberfläche der Metallschicht (4) an wenigstens einer Seite der metallisierten Polypropylen-Folie vorhanden ist,
wobei die metallisierte Polypropylen-Folie eine beidseitig metallisierte Polypropylen-Folie ist, die die Metallschicht auf beiden Seiten aufweist, und
die Metallschicht (4) Enden hat, die jeweils um eine Strecke, die nicht kürzer ist als 0,05 mm, von den ersten beiden Seiten (7) des mehrschichtigen Elementes des mehrschichtigen Körpers entfernt sind.

**9.** Mehrschichtiger Folienkondensator nach Anspruch 8, wobei das mehrschichtige Element des Weiteren eine zweite Polypropylen-Folie (3) enthält, die abwechselnd auf die metallisierte Polypropylen-Folie (8) geschichtet ist.

**Revendications**

**1.** Procédé de fabrication d'un condensateur à film multicouche, comprenant les étapes consistant à :

réaliser un film de polypropylène métallisé en déposant par évaporation une couche métallique (4) incluant du zinc sur un film de polypropylène,
réaliser un corps multicouche incluant le film de polypropylène métallisé en formant des piles avec le film de polypropylène métallisé,
former des électrodes métalliques vaporisées (1) sur les deux côtés du corps multicouche, et
fournir un élément de condensateur en découpant le corps multicouche le long d'une surface de découpe,
**caractérisé par**
l'application d'un faisceau laser pulsé présentant une largeur d'impulsions dans la plage allant de 30 ns à 1 $\mu$s sur la surface de découpe (7) de l'élément de condensateur afin d'éliminer le métal de la couche métallique, qui est exposé sur la surface de découpe, et le métal de la couche métallique qui se trouve sur une surface du film à proximité de la surface de découpe à une distance qui n'est pas plus courte que 0,05 mm à partir de la surface de découpe,
dans lequel ladite étape consistant à fournir l'élément de condensateur comprend la découpe du corps multicouche avec une scie rotative présentant des bords de découpe non chanfreinés ni arrondis.

**2.** Procédé selon la revendication 1, dans lequel le faisceau laser pulsé présente une densité d'énergie de puissance crête qui n'est pas inférieure à 10 kW/mm$^2$.

**3.** Procédé selon la revendication 1 ou 2, dans lequel le faisceau laser pulsé présente une longueur d'onde dans la plage allant de 0,5 à 2,0 $\mu$m, et le produit de la largeur d'impulsion et de la fréquence du faisceau laser pulsé se trouve dans la plage allant de $10^{-4}$ à $10^{-2}$.

**4.** Procédé selon l'une quelconque des revendications 1 à 3, comprenant en outre :

la fourniture d'un corps de bobinage cylindrique à partir du corps multicouche,
dans lequel ladite étape consistant à fournir l'élément de condensateur comprend la découpe du corps de bobinage cylindrique avec la scie rotative.

**5.** Procédé selon la revendication 4, dans lequel la scie rotative présente une distance de découpe par dent qui n'est pas plus courte que 0,03 mm.

**6.** Procédé selon l'une quelconque des revendications 1 à 5, comprenant en outre l'étape consistant à appliquer un gaz d'oxygène sur au moins un côté du film de polypropylène métallisé, dans lequel le film de polypropylène métallisé est un film de polypropylène métallisé des deux côtés comportant un métal qui est évaporé sur ses deux côtés.

7. Procédé selon l'une quelconque des revendications 1 à 6, dans lequel ladite étape consistant à réaliser le corps multicouche comprend le bobinage du film de polypropylène métallisé afin de procurer un corps de bobinage cylindrique.

8. Condensateur à film multicouche comprenant :

un élément multicouche obtenu en découpant un corps multicouche incluant un premier film de polypropylène (8) comportant une couche métallique (4) appliquée par évaporation sur une surface dudit film en formant un film de polypropylène métallisé, ledit élément multicouche présentant deux premiers côtés (7) procurés par ladite découpe et deux seconds côtés différents desdits deux premiers côtés, la couche métallique incluant du zinc,
**caractérisé par**
des électrodes métalliques vaporisées (1) prévues respectivement sur lesdits deux seconds côtés dudit élément multicouche, et
un film oxydé prévu sur une surface de la couche métallique (4) sur au moins un côté du film de polypropylène métallisé,
dans lequel le film de polypropylène métallisé est un film de polypropylène métallisé des deux côtés comportant une couche métallique appliquée sur ses deux côtés, et
dans lequel ladite couche métallique (4) présente des extrémités dont la distance n'est pas plus courte que 0,05 mm à partir desdits deux premiers côtés (7) dudit élément multicouche dudit corps multicouche, respectivement.

9. Condensateur à film multicouche selon la revendication 8, dans lequel ledit élément multicouche inclut en outre un second film de polypropylène (3) devant être empilé en alternance sur ledit film de polypropylène métallisé (8).

# FIG. 1

# FIG. 2

# FIG. 3

# FIG. 4

# FIG. 5

Step 1 — Evaporate Metal Including Zinc on both sides of PP Film

(Apply Oxygen Gas to Film before Winding Film)

Step 2 — Make Annular Multi-Layer Body Formed of Multi-Layer Film by Winding PP Film on Bobbin Plural Times

Step 3 — Form Metallikon Electrode Heat Aging

Step 4 — Cut Body

Step 5 — Apply Pulse Laser Beam

Peak Power Energy Density: More Than 10kW/mm$^2$
Duty: $10^{-4}$-$10^{-2}$

Step 6 — Weld Lead and Cover with Resin

# FIG. 6

Removal Distance of Evaporated Layer (mm)

Reference Numerals

| | |
|---|---|
| 1 | Sprayed-Metal Electrode |
| 2 | Both-Side Metallized Polypropylene Film |
| 3 | Non-Metallized Polypropylene Film |
| 4 | Metal including Zinc |
| 5 | Insulating Sheet |
| 6 | Portion without Evaporated Metal |
| 7 | Cut Surface |
| 8 | Polypropylene Film |
| 11 | Capacitor Element |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55160420 A
- JP 55160419 A
- JP 56101736 A
- JP 60055981 A
- JP 60016740 A

- JP 63036131 A
- JP 5335181 A
- JP 3057205 A
- US 5291642 A